# EUROPEAN PATENT SPECIFICATION

(11) **EP 1 133 860 B1**
(45) Date of publication and mention of the grant of the patent: **22.08.2007**
(21) Application number: 00967687.5
(22) Date of filing: 15.09.2000
(51) Int. Cl.: H04L 29/06

(54) **PDA HAS WIRELESS MODEM FOR REMOTE CONTROL VIA THE INTERNET**
PDA HAT DRAHTLOSES MODEM ZUR FERNSTEUERUNG ÜBER DAS INTERNET
L'ASSISTANT NUMERIQUE DISPOSE D'UN MODEM SANS FIL POUR COMMANDE A DISTANCE PAR INTERNET

(30) Priority: 27.09.1999 US 156468 P; 27.10.1999 US 427821
(43) Date of publication of application: 19.09.2001
(73) Proprietor: Koninklijke Philips Electronics N.V., 5621 BA Eindhoven (NL)
(72) Inventor: KEMINK, Joost, NL-5656 AA Eindhoven (NL); SAGAR, Richard, NL-5656 AA Eindhoven (NL)
(74) Representative: Groenendaal, Antonius W. M.
(86) International application number: PCT/EP2000/009083
(87) International publication number: WO 2001/024473

(56) References cited:
- EP-A- 1 045 302
- WO-A-00/43891
- US-A- 5 086 385
- PATENT ABSTRACTS OF JAPAN vol. 1999, no. 12, 29 October 1999 (1999-10-29) & JP 11 196479 A (TOSHIBA CORP.), 21 July 1999 (1999-07-21)

## Description

### FIELD OF THE INVENTION

The invention relates in particular to remote control of consumer electronics (CE) equipment.

### BACKGROUND ART

Remote control units are widely known. An example is the Pronto manufactured by Royal Philips Electronics. The Pronto is a so-called universal programmable remote control unit. It enables storing the IR codes of practically any existing consumer electronics (CE) apparatus. The Pronto has an LCD with touch screen functionality as a user-interface. The control functionalities of the Pronto can be fully customized by the user him/herself. The Pronto communicates with nearby CE equipment using infra-ed (IR) radiation.

### SUMMARY OF THE INVENTION

The invention takes the concept of "remote control" within the CE context a step further. The inventors propose to provide fully remote control to the user regardless of the distance between the equipment to be controlled and the user. The inventors also propose a two-way communication between the remote control and the equipment to be controlled.

To this end, the invention provides an information processing system that has a handheld computing device, e.g., a PDA,(Personal Digital Assistant) with a user-interface and a wireless modem coupled to the handheld. The wireless modem enables communication with a server via a data network such as the Internet. The system further comprises a controllable consumer electronics sub-system coupled to the server. A control network is-can be coupled between the server and the sub-system The handheld device has means for functioning as a user-controllable remote control unit for the consumer electronics sub-system via the data network and the server. The handheld is now capable of functioning as a wireless remote control device for the sub-system via the Internet and the server. The system also comprises a camera for capturing an image. For example, together with hardware and software can be provided with the camera to create a formatted still image suitable for being displayed on the handheld device. The camera is coupled to the server. The handheld device has further means for receiving the image under user control from the server via the data network and the wireless modem and for displaying the image at a GUI (118) of the handheld device. The user can now instruct retrieval of a still image from the server via the Internet. This application serves as, e.g., a security system that enables the remote user to monitor his/her front porch, or to monitor a child by way of a remote (or fall-back) baby-sit. The user-accessibility of equipment is guaranteed by the ubiquity of the Internet, thus enabling to expand the range of control and monitoring capabilities for a mobile user.

The invention also relates to a method of enabling a user to remotely control a consumer electronics sub-system. The method comprises enabling a server that is coupled to the consumer electronics sub-system, to receive via a data network a command sent from a handheld device via a wireless modem. This serves to effect control of the consumer electronics sub-system. The method further comprises enabling the handheld device to receive from the server an image, captured at the consumer electronics sub-system, via the data network and the wireless modem and to display the image at a user interface of the handheld device.

The invention also relates to a handheld device comprising a wireless modem for coupling the handheld device to a data network; a user interface for receiving a user input; a software application for configuring the device as a remote control for a consumer electronics sub-system by processing the user input and sending a command to the data network for remote control of the consumer electronics sub-system coupled to the data network. The software application is operative to render at the user interface an image captured by the consumer electronics sub-system and received over the data network via the modem.

For completeness reference is made to the following patent documents:
- JP-A-11196479. This document discloses a radio handy terminal for a remote controller in order to realize a control system using a radio remote controller employing a large screen size liquid crystal touch panel. More specifically, the radio handy terminal is employed for a remote controller. Receivers are provided in controlled object devices. The remote controller exchanges information with the receivers by a radio signal. The remote controller is provided with a radio MODEM setting file and a control signal management file, and each controlled object device has a control signal management file. This document neither teaches nor suggests control of the controlled object via a data network and a server. This document neither teaches nor suggests the use of a modem for communication via a network.
- EP-A 1 045 302. This document discloses a mobile terminal that is arranged to communicate over a cellular communication system with a control system connected to a plurality of field devices in an industrial process. The purpose is to remote control, configure or monitor the field devices. The mobile terminal accesses through a dedicated data connection established over the cellular communication system an interactive user interface associated with the control system and arranged to utilize the configuration, control and management data of the control system. In the preferred embodiment the interactive user interface is provided by a Word Wide Web (WWW) server. This document neither teaches nor suggests a camera for visual feedback.

Reference is also made to the following patent documents:
- WO0124387 filed 9/24/99 for Martin Freeman and Bonghan Cho for REMOTE INITIATES RETRIEVAL OF CONTROL CONFIGURATION. This document relates to a programmable remote control unit that is capable of initiating retrieval of a control configuration from a storage device external to the unit, The unit comprises a memory to store the retrieved control configuration; a display for display of icons representing the configuration; and a touch screen for entering a selection based on the icons displayed. The storage device is a component a CE apparatus. By storing or backing-up the control configuration for a specific apparatus in the apparatus itself the remote is made truly universally programmable.
- WO0017789 filed 9/25/98 for Adrian Turner, Simon Pearce, David Eves and Allan Timms for CUSTOMIZED UPGRADING OF INTERNET-ENABLED DEVICES BASED ON USER-PROFILE, and
- WO0028436 filed 11/10/98 for Eugene Shteyn for UPGRADING OF SYNERGETIC ASPECTS OF HOME NETWORKS, both of which relate to a server system that maintains a user profile of a particular end-user of consumer electronics network-enabled equipment and a database of new technical features for this type of equipment. If there is a match between the profile and a new technical feature, and the user has indicated he/she is willing to receive the information about updates or sales offers, the user gets notified via the network of the option to obtain the feature. Synergy is detected between pieces of equipment of the user in order to notify him/her of further possibilities of using or expanding his/her equipment.

### BRIEF DESCRIPTION OF THE DRAWINGS

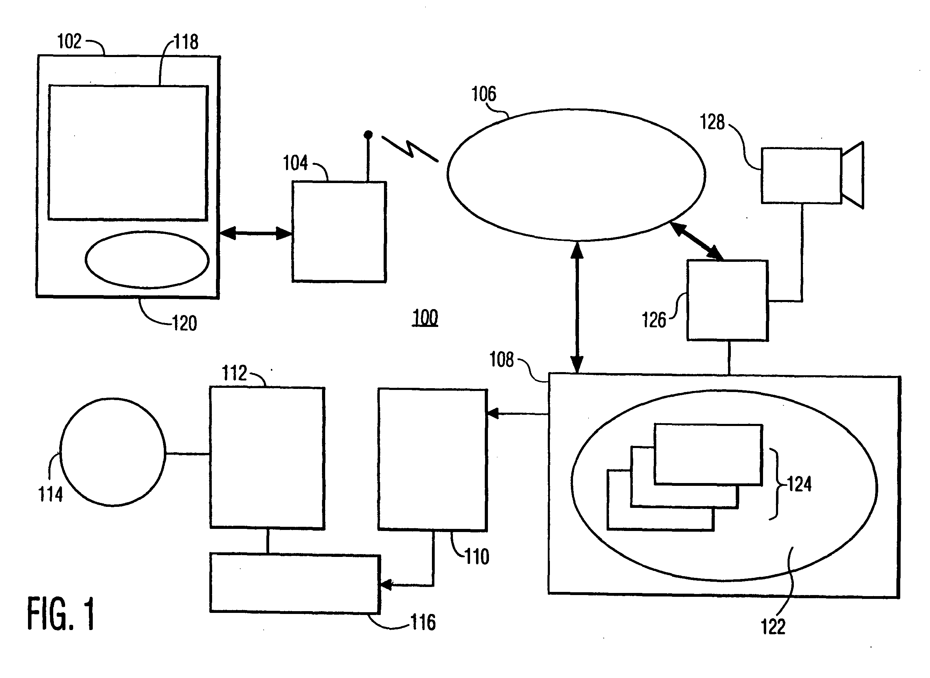

The invention is explained by way of example and with reference to the accompanying drawings, wherein Fig. 1 is a block diagram of a system in the invention.

### PREFFERED EMBODIMENTS

The invention is explained below within the context of two examples. A first example is the use of the remote control via the Internet to turn on and turn off a lamp. The second example relates to retrieving an image from a home server.

Fig.1 is a block diagram of a system 100 of the invention. System 100 comprises a hand-held device 102 such as a personal digital assistant (PDA),e.g., a PalmIIIx manufactured by 3COM or a Windows CE-based handheld, that is connected to a data network 106, e.g., the Internet, via a wireless modem 104. Modem 104 is, for example, a Minstrel or a Ricochet. The Minstrel marketed by Novatel Wireless is a two-way wireless modem for a PDA that lets the user browse the Web and receive email, among other things. In a more general sense, a wireless modem like the Minstrel or Ricochet provides the handheld device with an IP address that can be used by any type of application that uses the Internet for communication (within limitations of throughput, latency and coverage). The Minstrel uses a technology referred to as Cellular Digital Packet Data (CDPD) that is supported by the cellular service providers. Web surfing is limited to a CDPD speed cap of 19.2-kbps. The Ricochet from Metricom has a faster connect rate, in the 28.8K-bps range, but it is supported in only three metropolitan centers (the San Francisco Bay area, Seattle and Washington). Note that the remote control functionality in the system of the invention does not require a high data rate. The information communicated is limited in size. The data rate in this example is approximately 9,600 Baud. System 100 further has a server 108, an X-10 controller 110, an X-10 switch module 112 and a lamp 114. X-10 is a communications protocol for control of electrical devices. The protocol is designed for communications between X-10 transmitters and X-10 receivers which communicate on standard household wiring 116. X-10 is mentioned here as an example. Alternative control mechanisms are feasible that do not use the power supply lines, such as CEBus, I2C, IR (through an IR blaster), etc. Switch 112 connects lamp 114 to main power supply 116 under control of controller 110. Controller 110 in turn gets its control input from server 108.

PDA 102 has a display 118 with a touch screen or graphical tablet functionality, and a client application 120. Client application 120 controls the creation of soft buttons on display 118. Assume that application 120 is activate on PDA 102. When user activates an ON-button on display 118, application 120 uses wireless modem 104 to send a command via the Internet 106 to server 108.

Server 108 comprises in this example a PC hardware running an Apache web server 122. The Apache is a public-domain Web server. Its first version was developed in 1995 based on the NCSA httpd Web server. The name "Apache" stems from the fact that it was developed from existing NCSA code plus various patches. Accordingly, it was referred to as a patchy server, hence the name Apache Server. The Apache has become the world's most popular Web server because of its high performance, sophisticated features, and because of the fact that its source code is available for free.

Server 108 further comprises software modules 124 that comprise CGI scripts run by Apache server 122. CGI stands for "Common Gateway Interface" and is as specification for transferring information back and forth between a Web server and an application. CGI is part of the HTTP protocol.

Apache server 122 running on PC 108 interprets the command received from PDA 102 over the Internet 106. The interpretation mechanism uses, e.g., a data base on PC 108, wherein each specific command received is linked to a specific action. The data base can be fully customized by the user. The command in this example is interpreted as an action to turn on lamp 114. To this end, PC communicates with controller 110, e.g., via RS232, and instructs the latter to issue a command to switch 112 to turn lamp 114 on. Switch 112 receives the command and connects lamp 114 with power lines 116. Similarly, when the user thereafter presses an OFF-button on PDA 102, client application 120 sends a corresponding command via modem 104 to PC 108 via the Internet 106. Apache server 122 interprets the command and instructs controller 110 to let switch 112 turn off lamp 114.

System 100 further comprises a server 126, herein referred to as the Reliable Home Server (RHS) and a camera 128. RHS 126 may be a component within server 108 or a separate low-cost server, as in this example. Alternatively, web server 122 and scripts 124 can be components of server 126. RHS 126 comprises hardware and software to retrieve images from a video source, in this example, a still image from video camera 128. Client application 120 provides a soft button "VIEW" that, when pressed, let application 120 send a command via modem 104 and the Internet 106 to server 108. Apache server 122 running on PC 108 receives the command, interprets it and instructs RHS 126 to retrieve a still image and return it to Apache server 122. The latter converts the format of the still image suitable for display on GUI 118 of PDA 102 and then stores the formatted image in a data base on PC 108. The user presses another soft button "UPDATE' created by client application 120. The associated command gets send via modem 104 and the Internet 106 to PC 108. Apache server 122 receives the command, interprets it, and accordingly retrieves the stored image from the database and returns it to PDA 102 via common Internet protocols. PDA 102 then displays the image on GUI 118 under control of client application 120.

Above, the remote control over the Internet has been explained with reference to some conceptually simple examples. It is clear that other and more sophisticated scenarios can be implemented using the invention. For example, a recording device such as a VCR or TiVo can be programmed from anywhere in the world when the user realizes that he/she has forgotten or was unable to set the device to record a favorite TV program. Within this context, also see WO 0060858 (attorney docket PHA 23,633) filed 4/1/99 for Eugene Shteyn for TIME-AND LOCATION-DRIVEN PERSONALIZED TV. As another example, the user may turn on the central heating and turn on the lights at home and in the garden while returning home by car late at night. As another example, the user may program or activate the sprinkler installation in the garden at home while at work or traveling.

## Claims

1. An information processing system (100) comprising:
- a handheld device (102) for providing a user-interface (118);
- a wireless modem (104) for coupling the handheld device to a data network (106);
- a server (108; 126) for communicating with the handheld device through the modem via the data network; and
- a controllable consumer electronics sub-system (114) coupled to the server; wherein:
- the handheld device has means for functioning as a user-controllable remote control unit for the consumer electronics sub-system (114) via the data network and the server;
- the system comprises a camera (128) for capturing an image;
- the camera is coupled to the server;
- the handheld device has further means for receiving the image under user control from the server via the data network and the wireless modem and for displaying the image at the user-interface of the handheld device.

2. The system of claim 1, wherein:
- the handheld device comprises a client software application (120) for enabling the device to send a user-input to the server; and
- the server comprises software (124) for interpreting the user-input received via the data network and for issuing a corresponding command to the consumer electronics sub-system based on the user-input.

3. A method of enabling a user to remotely control a consumer electronics sub-system (114), the method comprising:
- enabling a server (108; 126) coupled to the consumer electronics sub-system to receive via a data network a command sent from a handheld device via a wireless modem for effecting control of the consumer electronics sub-system (114); and
- enabling the handheld device to receive from the server an image, captured at the consumer electronics sub-system, via the data network and the wireless modem and to display the image at a user interface (118) of the handheld device.

4. A handheld device (102) comprising:
- a wireless modem (104) for coupling the handheld device to a data network (106);
- a user interface (118) for receiving a user input;
- a software application (120) for configuring the device as a remote control for a consumer electronics sub-system (114) by processing the user input and sending a command to the data network_for remote control of the consumer electronics sub-system coupled to the data network; the software application is operative to render at the user interface an image captured by the consumer electronics sub-system and received over the data network via the modem.

## Patentansprüche

1. Informationsverarbeitungssystem (100), das die nachfolgenden Elemente umfasst:
- ein Handgerät (102) zum Schaffen einer Benutzerschnittstelle (118);
- ein drahtloses Modem (104) zur Kopplung des Handgeräts mit einem Datennetzwerk (106);
- einen Server (108; 126) zum Kommunizieren mit dem Handgerät durch das Modem über das Datennetzwerk; und
- ein steuerbares Verbraucherelektroniksubsystem (114), das mit dem Server gekoppelt ist; wobei
- das Handgerät Mittel aufweist zum Funktionieren als vom Benutzer steuerbare Fernbedienungseinheit für das Verbraucherelektroniksubsystem (114) über das Datennetzwerk und den Server;
- das System eine Kamera (128) aufweist zum Einfangen eines Bildes;
- die Kamera mit dem Server gekoppelt ist;
- das Handgerät ein weiteres Mittel aufweist zum Empfangen des Bildes unter Benutzersteuerung von dem Server aus über das Datennetzwerk und das drahtlose Modem und zum Wiedergeben des Bildes an der Benutzerschnittstelle des Handgeräts.

2. System nach Anspruch 1, wobei:
- das Handgerät eine Kundensoftwareapplikation (120) aufweist, damit dem Handgerät die Möglichkeit geboten wird, eine Benutzereingabe zu dem Server zu senden; und
- der Server Software (124) aufweist zum Interpretieren der Benutzereingabe, die über das Datennetzwerk empfangen wurde und zum Ausliefern eines entsprechenden Befehls zu dem Verbraucherelektroniksubsystem auf Basis der Benutzereingabe.

3. Verfahren, nach dem einem Benutzer die Möglichkeit geboten wird, ein Verbraucherelektroniksubsystem (114) fern zu steuern , wobei das Verfahren die nachfolgenden Verfahrensschritte umfasst:
- einem Server (108; 126), der mit dem Verbraucherelektroniksubsystem gekoppelt ist, die Möglichkeit bieten, über ein Datennetzwerk einen Befehl zu empfangen, der von einem Handgerät aus über ein drahtloses Modem gesendet wurde, und zwar zum Effektuieren der Steuerung des Verbraucherelektroniksubsystems (114); und
- den Handgerät die Möglichkeit bieten, ein Bild von dem Server zu empfangen, wobei dieses Bild bei dem Verbraucherelektroniksubsystem eingefangen wurde, und zwar über das Datennetzwerk und das drahtlose Modem und zum Wiedergeben des Bildes an einer Benutzerschnittstelle (118) des Handgeräts.

4. Handgerät (102), das die nachfolgenden Elemente aufweist:
- ein drahtloses Modem (104) zur Kopplung des Handgeräts mit einem Datennetzwerk (106);
- eine Benutzerschnittstelle (118) zum Empfangen einer Benutzereingabe;
- eine Softwareapplikation (120) zum Konfigurieren der Anordnung als eine Fernbedienung für ein Verbraucherelektroniksubsystem (114) durch Verarbeitung der Benutzereingabe und durch Übertragung eines Befehls zu dem Datennetzwerk zur Fernbedienung des Verbraucherelektroniksubsystems, das mit dem Datennetzwerk gekoppelt ist, wobei die Softwareapplikation wirksam ist zum Aufbereiten eines Bildes bei der Benutzerschnittstelle, das von dem Verbraucherelektroniksubsystem eingefangen und über das Datennetzwerk über das Modem empfangen wurde.

## Revendications

1. Système de traitement d'information (100) comprenant:
- un dispositif portable (102) pour fournir une interface utilisateur (118);
- un modem sans fil (104) pour coupler le dispositif portable à un réseau de données (106);
- un serveur (108; 126) pour communiquer avec le dispositif portable à travers le modem par le biais du réseau de données; et
- un sous-système électronique grand public commandable (114) qui est couplé au serveur; dans lequel:
- le dispositif portable présente des moyens pour fonctionner en tant qu'une unité de commande à distance commandable par l'utilisateur pour le sous-système électronique grand public (114) par le biais du réseau de données et du serveur;
- le système comprend une caméra (128) pour capter une image;
- la caméra est couplée au serveur;
- le dispositif portable présente de nouveaux autres moyens pour recevoir l'image sous la commande d'utilisateur en provenance du serveur par le biais du réseau de données et du modem sans fil et pour afficher l'image à l'endroit de l'interface utilisateur du dispositif portable.

2. Système selon la revendication 1, dans lequel:
- le dispositif portable comprend une application logicielle de client (120) pour permettre au dispositif d'envoyer une entrée d'utilisateur au serveur; et
- le serveur comprend du logiciel (124) pour interpréter l'entrée d'utilisateur qui est reçue par le biais du réseau de données et pour fournir une instruction correspondante au sous-système électronique grand public qui est basé sur l'entrée d'utilisateur.

3. Procédé pour permettre à un utilisateur de commander à distance un sous-système électronique grand public, le procédé comprenant l'étape consistant à:
- permettre à un serveur (108; 126) qui est couplé au sous-système électronique grand public de recevoir, par le biais d'un réseau de données, une instruction qui est envoyée à partir d'un dispositif portable par le biais d'un modem sans fil pour effectuer la commande du sous-système électronique grand public (114); et
- permettre au dispositif portable de recevoir du serveur une image qui est captée à l'endroit du sous-système électronique grand public par le biais du réseau de données et du modem sans fil et d'afficher l'image à l'endroit d'une interface utilisateur (118) du dispositif portable.

4. Dispositif portable (102) comprenant:
- un modem sans fil (104) pour coupler le dispositif portable à un réseau de données (106);
- une interface utilisateur (118) pour recevoir une entrée d'utilisateur;
- une application logicielle (120) pour configurer le dispositif en tant qu'une commande à distance pour un sous-système électronique grand public (114) par le traitement de l'entrée d'utilisateur et par l'envoi d'une instruction au réseau de données pour la commande à distance du sous-système électronique grand public qui est couplé au réseau de données; l'application logicielle est opérationnelle pour rendre à l'endroit de l'interface utilisateur une image qui est captée par le sous-système électronique grand public et qui est reçue à travers le réseau de données par le biais du modem.
